# EUROPÄISCHE PATENTSCHRIFT

(11) **EP 1 367 293 B1**
(45) Veröffentlichungstag und Bekanntmachung des Hinweises auf die Patenterteilung: **05.10.2005**
(21) Anmeldenummer: 03019572.1
(22) Anmeldetag: 21.12.1999
(51) Int. Cl.: F16H 3/00

(54) **Zahnräderwechselgetriebe mit zwei im Kraftfluss parallel zueinander angeordneten Teilgetrieben**
Toothed speed-changing gearing with two parallel transmission paths
Boîte de vitesses à engrenages avec division de puissance

(30) Priorität: 24.12.1998 DE 19860251; 20.05.1999 DE 19923185
(43) Veröffentlichungstag der Anmeldung: 03.12.2003
(62) Teilanmeldung aus: 99125458.2
(73) Patentinhaber: DaimlerChrysler AG, 70567 Stuttgart (DE)
(72) Erfinder: Heinzel, Markus, 73072 Donzdorf (DE); Sperber, Ralf, 73240 Wendlingen (DE); Wörner, Günter, 71394 Kernen (DE)

(56) Entgegenhaltungen:
- EP-A- 0 288 779
- EP-A- 1 067 312
- EP-A- 1 077 336
- DE-A- 3 812 327
- DE-A- 19 524 233
- DE-A- 19 821 164
- DE-A- 19 853 824
- US-A- 4 461 188
- US-A- 4 998 443

## Beschreibung

Die Erfindung betrifft ein Zahnräderwechselgetriebe mit zwei im Kraftfluß parallel zu einander angeordneten Teilgetrieben nach dem Oberbegriff des Anspruchs 1.

Die in Kraftfahrzeugen vorherrschenden Handschaltgetriebe mit einer Reibkupplung sind einfach und robust, haben jedoch den Nachteil, daß während des Gangwechsels eine Zugkraftunterbrechung auftritt. Konventionelle Automatikgetriebe mit einem hydrodynamischen Wandler vermeiden zwar eine Zugkraftunterbrechung während des Gangwechsels, besitzen jedoch aufgrund des Wandlers einen schlechteren Wirkungsgrad als Handschaltgetriebe. Ferner besitzen sie ein höheres Gewicht und sind kostenintensiver.

Bei Zahnräderwechselgetrieben mit zwei reibschlüssigen Lastschaltkupplungen und zwei im Kraftfluß parallel zueinander angeordneten Teilgetrieben können Gangwechsel unter Last durchgeführt werden, und zwar mit einer Überschneidungssteuerung der Lastschaltkupplungen. Damit können kostengünstige Automatikgetriebe mit einem guten Wirkungsgrad erreicht werden. In der Regel sind die geraden Getriebegänge dem einen Teilgetriebe und die ungeraden Getriebegänge dem anderen Teilgetriebe zugeordnet, so daß sequentiell unter Last geschaltet werden kann, jedoch nicht ohne weiteres einzelne Getriebegänge übersprungen werden können, sogenanntes Doppelhochschalten bzw. Doppelrückschalten.

Aus der US 4,461,188 (beinhaltet die Merkmale des Oberbegriffs des ersten Anspruchs) ist bereits ein Zahnräderwechselgetriebe mit zwei Teilgetrieben bekannt, die im Kraftfluss parallel zueinander angeordnet sind und je eine reibschlüssige Lastschaltkupplung und je eine Zwischenwelle aufweisen. Jeweils eine Zwischenwelle ist über eine der Lastschaltkupplungen mit einer Eingangswelle koppelbar. Dabei sind in drei Zahnradebenen sechs Gänge angeordnet, wobei jeweils eine Zahnradebene zwei Gänge trägt. Die Eingangswelle ist mit einem Differentialgetriebe durch das erste und das zweite Teilgetriebe verbunden. Jede der beiden Zwischenwellen weist zwei Festräder auf. Die insgesamt vier Festräder kämmen mit Losrädern, die auf Abtriebswellen angeordnet sind, welche parallel und beabstandet zueinander und zu den besagten Zwischenwellen liegen. Die beiden Abtriebswellen treiben über Ausgangszahnräder auf das Differentialgetriebe ab. Hinter einer gemeinsamen Zahnradebene des dritten und des fünften Getriebegangs liegt unmittelbar benachbart eine weitere Zahnradebene des ersten Getriebegangs.

Die eine Zwischenwelle ist als Innenwelle ausgeführt, welche im Austrittsbereich aus der als Hohlwelle ausgeführten anderen Zwischenwelle ebenfalls als Hohlwelle ausgeführt ist. Der nur sehr kurz über die andere Zwischenwelle hinausragende Bereich der einen Zwischenwelle trägt dabei kein Zahnrad.

Aus der US 4,658,663 ist ein Zahnräderwechselgetriebe bekannt, bei dem eine Eingangswelle mit einer Ausgangswelle durch ein erstes und ein zweites Teilgetriebe verbunden ist, die im Kraftfluß parallel zueinander angeordnet sind und je eine reibschlüssige Lastschaltkupplung aufweisen. Mit den Lastschaltkupplungen sind konzentrisch zueinander angeordnete Zwischenwellen der Teilgetriebe mit der Eingangswelle verbindbar. Die Zwischenwellen sind über Getriebekonstanten, über eine gemeinsame, parallel zur Eingangswelle angeordnete Vorgelegewelle und über Zahnradpaare mit der Ausgangswelle wirkungsmäßig verbindbar. Die Zahnradpaare für die Vorwärtsgetriebegänge I, III, und IV sowie das Zahnradpaar für den Rückwärtsgetriebegang gehören dem ersten Teilgetriebe an. Der vierte Getriebegang ist als direkter Getriebegang ausgelegt und kann durch Einrücken eines Schaltelements zwischen der Ausgangswelle und der Zwischenwelle des ersten Teilgetriebes geschaltet werden.

Dem zweiten Teilgetriebe gehören die Zahnradpaare der Vorwärtsgetriebegänge II und V sowie ein zusätzliches Zahnradpaar an, deren Übersetzung gleich der Übersetzung des dritten Getriebegangs ist, dessen Zahnradpaar dem ersten Teilgetriebe angehört. Im ersten Teilgetriebe ist eine Zahnradkupplung für den dritten Getriebegang und die Direktkupplung für den vierten Getriebegang zu einer Wechselkupplung mit einer gemeinsamen Schaltschiebemuffe zusammengefaßt, welche mit einem Losrad des Zahnradpaars für den dritten Getriebegang oder mit der Ausgangswelle kuppelbar ist.

Zwar sind ohne Unterbrechung der Drehmomentübertragung bei dem Zahnräderwechselgetriebe alle Doppelrückschaltungen und Doppelhochschaltungen möglich, jedoch erfordern die Schaltungen vom direkten vierten Getriebegang zum ersten und dritten Getriebegang, deren Zahnradpaare ebenfalls dem ersten Teilgetriebe angehören, die zwischenzeitliche Einschaltung des zusätzlichen Zahnradpaars des dritten Getriebegangs. Ferner sind insgesamt sieben Zahnradpaare entlang der gemeinsamen Vorgelegewelle angeordnet, wodurch das Zahnräderwechselgetriebe relativ lang baut. Zum Anfahren aus dem ersten Getriebegang wird stets die erste Lastschaltkupplung des ersten Teilgetriebes genutzt, wodurch an dieser gegenüber der zweiten Lastschaltkupplung ein erhöhter Verschleiß auftritt.

Der Erfindung liegt die Aufgabe zugrunde, ein Zahnräderwechselgetriebe mit geringem Bauaufwand und insbesondere mit geringer Baulänge, niedrigem Gewicht und mit einem hohen Wirkungsgrad zu entwickeln. Sie wird gemäß der Erfindung durch die Merkmale des unabhängigen Anspruches gelöst. Weitere Ausgestaltungen ergeben sich aus den Unteransprüchen.

Die Erfindung geht aus von einem Zahnräderwechselgetriebe, bei dem eine Eingangswelle mit einem Differentialgetriebe durch ein erstes und ein zweites Teilgetriebe verbunden ist, die im Kraftfluß parallel zueinander angeordnet sind. Jedes Teilgetriebe besitzt eine reibschlüssige Lastschaltkupplung und eine Zwischenwelle, die zueinander konzentrisch und koaxial zur Eingangswelle angeordnet sind, wobei jeweils die Zwischenwelle über die Lastschaltkupplung mit der Eingangswelle wirkungsmäßig verbindbar ist. Jede Zwischenwelle besitzt zumindest ein Zahnrad. Zumindest eine Zwischenwelle ist mit einer zu den Zwischenwellen parallel angeordneten Abtriebswelle wirkungsmäßig verbindbar, die direkt oder indirekt auf das Differentialgetriebe abtreibt, beispielsweise indirekt über eine zusätzliche Welle, Seitenwelle bzw. Seitenstufe usw. Besonders vorteilhaft treibt die Abtriebswelle jedoch direkt auf ein Zahnrad des Differentialgetriebes, wodurch Bauraum eingespart und über wenige Zahnradeingriffe mit hohem Wirkungsgrad abgetrieben werden kann. Das Differentialgetriebe kann als separates Getriebe gestaltet sein oder ist ein integrierter Bestandteil.

Es wird vorgeschlagen, daß parallel zur ersten Abtriebswelle zumindest eine zweite Abtriebswelle angeordnet ist, die zu den Zwischenwellen und/oder zu dem Differentialgetriebe einen von der ersten Abtriebswelle abweichenden Achsenabstand aufweist, und zumindest ein Zahnrad wenigstens einer Zwischenwelle sowohl mit einem Zahnrad auf der ersten Abtriebswelle als auch mit einem Zahnrad auf der zweiten Abtriebswelle kämmt.

Zumindest ein Zahnrad und vorteilhaft mehrere Zahnräder auf einer oder vorteilhaft auf beiden Zwischenwellen können zwei Getriebegängen zugeordnet werden. Bei mehr als zwei Abtriebswellen können die Zahnräder auch mehr als zwei Getriebegängen zugeordnet werden. Es können bei einer kurzen Baulänge mit wenigen Zahnradebenen besonders viele Lastschaltmöglichkeiten und insbesondere sequentielle Schaltungen und zumindest die wichtigsten Doppelhoch- und Doppelrückschaltungen unter Last ohne zusätzliche Zahnradebenen erreicht werden. Bauraum, Gewicht und Kosten können reduziert und der Wirkungsgrad kann gesteigert werden. Aufgrund der erreichbaren kurzen Baulänge, eignet sich das erfindungsgemäße Zahnräderwechselgetriebe besonders für den Quereinbau in einem frontangetriebenen Kraftfahrzeug. Grundsätzlich ist es jedoch auch für einen Längseinbau in einem Kraftfahrzeug geeignet.

Erfindungsgemäß ist der erste und der zweite Getriebegang auf einer gemeinsamen Abtriebswelle angeordnet, so dass beim Gangwechsel vom ersten in den zweiten Getriebegang über die gleiche Abtriebswelle abgetrieben werden kann und ein Wechsel der Abtriebswellen kann vermieden und dadurch der Komfort für den meist unter hoher Last stattfindenden Gangwechsel vom ersten in den zweiten Getriebegang gesteigert werden und wobei einer Zahnradebene des fünften Getriebegangs unmittelbar benachbart eine Zahnradebene des ersten Getriebegangs folgt, welcher unmittelbar benachbart eine Zahnradebene des dritten Getriebegangs folgt, wobei diese drei Zahnradebenen in dem axial über die eine Zwischenwelle hinausragende Bereich der zweiten Zwischenwelle liegen und wobei im axialen Bereich der einen Zwischenwelle der zweite und sechste Getriebegang liegen.

Die erfindungsgemäße Lösung nach Anspruch 1 trägt dazu bei, die Lastschaltmöglichkeiten und den Wirkungsgrad zu erhöhen, Zahnradebenen und Bauraum einzusparen und ein sequentiellen Schalten unter Last zu ermöglichen.

Die Lastschaltkupplungen können auch unterschiedlich für verschiedene Anfahrvorgänge ausgelegt werden und/oder einzeln oder gemeinsam zum Anfahren aus einem höheren Getriebegang genutzt werden. Die Lastschaltkupplungen werden vorteilhaft abhängig von zumindest einem Betriebsparameter einzeln oder gemeinsam zum Anfahren genutzt, beispielsweise abhängig von einer an den Lastschaltkupplungen erfaßten Belastung, Reibung, Temperatur und/oder Verschleiß usw.

Weitere Vorteile ergeben sich aus der folgenden Zeichnungsbeschreibung.

Es zeigt :
- Fig. 1: eine schematische Darstellung eines nicht beantspruchten Zahnräderwechselgetriebes, bei dem zwei Abtriebswellen unterschiedliche Achsenabstände zu zwei Zwischenwellen aufweisen,
- Fig. 2: eine nicht beantspruchte Variante nach Fig. 1 mit vier Zahnradebenen,
- Fig. 3: eine schematische Darstellung eines erfindungsgemäßen Zahnräderwechselgetriebes, bei dem zwei Zwischenwellen über Schaltelemente verbindbar sind,
- Fig. 4: eine schematische Seitenansicht des Zahnräderwechselgetriebes nach Fig. 1 und
- Fig. 5: eine schematische Seitenansicht einer Variante nach Fig. 1.

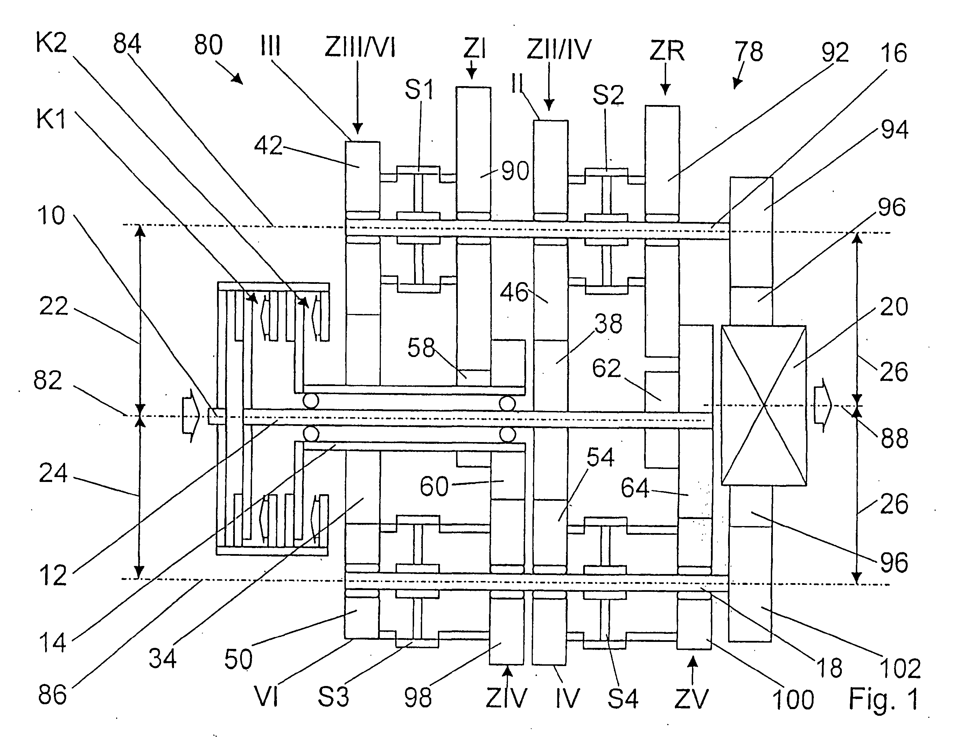

Fig. 1 zeigt ein Zahnräderwechselgetriebe, bei dem eine Eingangswelle 10 mit einem Differentialgetriebe 20 durch ein erstes und ein zweites Teilgetriebe 78, 80 verbunden ist, die im Kraftfluß parallel zueinander angeordnet sind. Jedes Teilgetriebe 78, 80 besitzt eine reibschlüssige Lastschaltkupplung K1, K2 und eine Zwischenwelle 12, 14, die zueinander konzentrisch und koaxial zur Eingangswelle 10 angeordnet sind, wobei jeweils die Zwischenwelle 12, 14 über die Lastschaltkupplung K1, K2 mit der Eingangswelle 10 wirkungsmäßig verbindbar ist. Auf jeder Zwischenwelle 12, 14 sind jeweils drei Festräder 34, 58, 60, 38, 62, 64 gelagert.

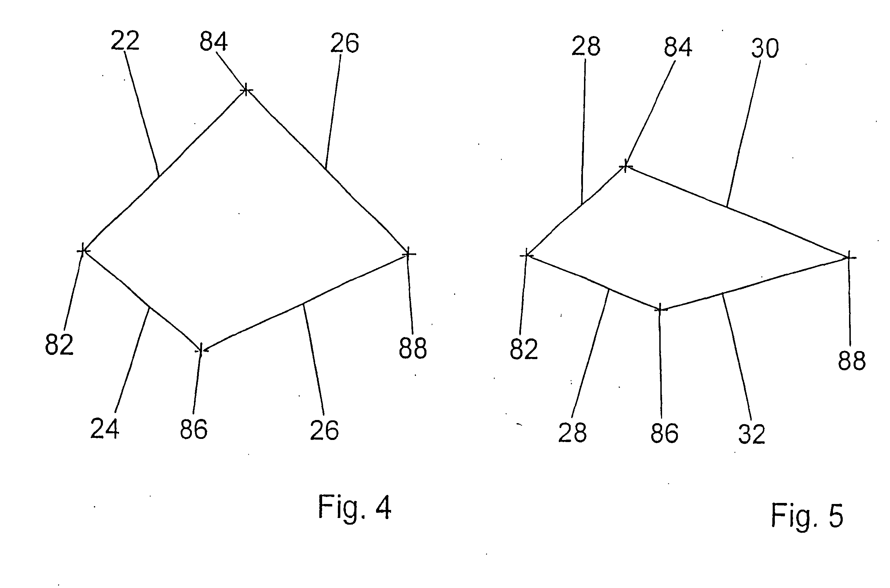

Neben einer parallel zu den Zwischenwellen 12, 14 angeordneten ersten Abtriebswelle 16 ist parallel eine zweite Abtriebswelle 18 angeordnet. Die zweite Abtriebswelle 18 besitzt ausgehend von ihrer Mittelachse 86 einen Achsenabstand 24 zur Mittelachse 82 der Eingangswelle 10 und der Zwischenwellen 12, 14, der kleiner ist als ein Achsenabstand 22 ausgehend von einer Mittelachse 84 der ersten Abtriebswelle 16 zur Mittelachse 82 (Fig. 1 und 4). In Fig. 4 sind die Mittelachsen 82, 84, 86 und die Achsenabstände 22, 24 in einer Seitenansicht schematisch dargestellt. Die Mittelachsen 84, 86 der Abtriebswellen 16, 18 besitzen einen gleichen Achsenabstand 26 zu einer Mittelachse 88 des Differentialgetriebes 20.

Das Festrad 34 auf der Zwischenwelle 14 kämmt sowohl mit einem auf der ersten Abtriebswelle 16 konzentrisch und drehbar gelagerten Losrad 42 als auch mit einem auf der zweiten Abtriebswelle 18 konzentrisch und drehbar gelagerten Losrad 50. Ferner kämmt das Festrad 38 auf der Zwischenwelle 12 sowohl mit einem auf der ersten Abtriebswelle 16 konzentrisch und drehbar gelagerten Losrad 46 als auch mit einem auf der zweiten Abtriebswelle 18 konzentrisch und drehbar gelagerten Losrad 54. Durch die unterschiedlichen Achsenabstände 22, 24 kann eine Zahnradebene ZIII/VI mit dem Festrad 34 und den Losrädern 42, 50 und eine Zahnradebene ZII/IV mit dem Festrad 38 und den Losrädern 46, 54 jeweils zwei Getriebegängen III, VI, II, IV zugeordnet werden.

In einem Ausführungsbeispiel in Fig. 5 ist das Zahnräderwechselgetriebe aus Fig. 1 mit veränderten Achsenabständen 28, 30, 32 dargestellt. Die Abtriebswellen 16, 18 besitzen ausgehend von ihren Mittelachsen 84, 86 einen gleichen Achsenabstand 28 zur Mittelachse 82 der Eingangswelle 10 und der Zwischenwellen 12, 14 und unterschiedliche Achsenabstände 30, 32 zur Mittelachse 88 des Differentialgetriebes 20. Die Achsenabstände 30, 32 sind so gewählt, daß sich wie beim Ausführungsbeispiel in Fig. 1 in der Zahnradebene ZII/IV ein Stufensprung vom zweiten in den vierten Getriebegang II-IV ergibt, der einem Stufensprung vom dritten in den sechsten Getriebegang III-VI entspricht, dem die Zahnradebene ZIII/VI zugeordnet ist. Neben den dargestellten Ausführungsbeispielen sind weitere verschiedene, dem Fachmann als sinnvoll erscheinende Ausführungsformen denkbar, beispielsweise auch Ausführungsformen, bei denen die Abtriebswellen 16, 18 zur Mittelachse 82 der Eingangswelle 10 und der Zwischenwellen 12, 14 und zur Mittelachse 88 des Differentialgetriebes 20 unterschiedliche Achsenabstände aufweisen.

Auf der Abtriebswelle 16 sind neben dem Losrad 42 weitere drei konzentrisch und drehbar gelagerte Losräder 90, 46, 92 und ein konzentrisch und drehfest gelagertes Festrad 94 angeordnet. Das Losrad 42 kämmt in der Zahnradebene ZIII/VI mit dem auf der Zwischenwelle 14 gelagerten Festrad 34 und ist dem dritten Getriebegang III zugeordnet. Das Losrad 90 kämmt in einer Zahnradebene ZI mit dem auf der Zwischenwelle 14 gelagerten Festrad 58 und ist dem ersten Getriebegang I zugeordnet. Zwischen den Losrädern 42, 90 ist eine Zahnradkupplung S1 angeordnet, die im dritten Getriebegang III das Losrad 42 und im ersten Getriebegang I das Losrad 90 mit der Abtriebswelle 16 kuppelt.

Das Losrad 46 kämmt in der Zahnradebene ZII/IV mit dem auf der Zwischenwelle 12 gelagerten Festrad 38 und ist dem zweiten Getriebegang II zugeordnet. Das dem Rückwärtsgetriebegang R zugeordnete Losrad 92 kämmt in einer Zahnradebene ZR mit einem nicht näher dargestellten Zahnrad zur Drehsinnumkehr, das wiederum mit dem Festrad 62 auf der Zwischenwelle 12 kämmt. Zwischen den Losrädern 46, 92 ist eine Zahnradkupplung S2 angeordnet, die im zweiten Getriebegang II das Losrad 46 und im Rückwärtsgetriebegang R das Losrad 92 mit der Abtriebswelle 16 kuppelt.

Das Festrad 94 treibt direkt mit einer festen Übersetzung auf ein Zahnrad 96 des Differentialgetriebes 20. ab. Der erste und der zweite Getriebegang I, II sind auf der Abtriebswelle 16 angeordnet. Beim Gangwechsel vom ersten in den zweiten Getriebegang I-II wird stets über die Abtriebswelle 16 abgetrieben. Ein Wechsel der Abtriebswellen 16, 18 wird vermieden und es kann ein hoher Schaltkomfort erreicht werden.

Neben dem Losrad 50 sind auf der Abtriebswelle 18 drei weitere konzentrisch und drehbar gelagerte Losräder 98, 54, 100 und ein konzentrisch und drehfest gelagertes Festrad 102 angeordnet.

Das Losrad 50 kämmt in der Zahnradebene ZIII/VI mit dem auf der Zwischenwelle 14 gelagerten Festrad 34 und ist dem sechsten Getriebegang VI zugeordnet. Das Losrad 98 kämmt in einer Zahnradebene ZIV mit dem auf der Zwischenwelle 14 gelagerten Festrad 60 und ist dem vierten Getriebegang IV zugeordnet. Zwischen den Losrädern 50, 98 ist eine Zahnradkupplung S3 angeordnet, die im sechsten Getriebegang VI das Losrad 50 und im vierten Getriebegang IV das Losrad 98 mit der Abtriebswelle 18 kuppelt.

Das Losrad 54 kämmt in der Zahnradebene ZII/IV mit dem auf der Zwischenwelle 12 gelagerten Festrad 38 und ist dem vierten Getriebegang IV zugeordnet. Das Losrad 100 kämmt in einer Zahnradebene ZV mit dem auf der Zwischenwelle 12 gelagerten Festrad 64 und ist dem fünften Getriebegang V zugeordnet. Zwischen den Losrädern 54, 100 ist eine Zahnradkupplung S4 angeordnet, die im vierten Getriebegang IV das Losrad 54 und im fünften Getriebegang V das Losrad 100 mit der Abtriebswelle 18 kuppelt. Das Festrad 102 treibt direkt mit einer festen Übersetzung auf ein Zahnrad 96 des Differentialgetriebes 20 ab.

Vom ersten Getriebegang I bis zum vierten Getriebegang IV kann ohne weiteres ersichtlich sequentiell mittels einer Überschneidungssteuerung der beiden Lastschaltkupplungen K1, K2 unter Last hochgeschaltet werden. Unter einer Überschneidungssteuerung soll stets eine Steuerung der Übertragungsfähigkeit beider Lastschaltkupplungen K1, K2 verstanden werden, bei der die Summe der Übertragungsfähigkeiten etwa konstant gehalten wird und die Übertragungsfähigkeit der auszurückenden Lastschaltkupplung gegen Null geht.

Nach einem Hochschalten vom dritten in den vierten Getriebegang III-IV verläuft im vierten Getriebegang IV der Kraftfluß von der Eingangswelle 10 über die erste Lastschaltkupplung K1, die Zwischenwelle 12, das Festrad 38, das Losrad 54, die Zahnradkupplung S4, die Abtriebswelle 18 und über das Festrad 102 zum Differentialgetriebe 20. Zum Hochschalten vom vierten in den fünften Getriebegang IV-V wird das Losrad 98 der Zahnradebene ZIV durch die Zahnradkupplung S3 mit der Abtriebswelle 18 gekuppelt. Durch eine Überschneidungssteuerung von der ersten Lastschaltkupplung K1 auf die zweite Lastschaltkupplung K2 wird vom vierten Getriebegang IV in der Zahnradebene ZII/IV in den vierten Getriebegang IV in der Zahnradebene ZIV unter Last geschaltet. Der Kraftfluß verläuft dann von der Eingangswelle 10 über die zweite Lastschaltkupplung K2, die Zwischenwelle 14, das Festrad 60, das Losrad 98, die Zahnradkupplung S3, die Abtriebswelle 18 und über das Festrad 102 zum Differentialgetriebe 20.

Vom vierten Getriebegang IV in der Zahnradebene ZIV kann ohne weiteres ersichtlich durch eine Überschneidungssteuerung der Lastschaltkupplungen K1, K2 sequentiell in den fünften und vom fünften in den sechsten Getriebegang VI unter Last geschaltet werden. Vom sechsten Getriebegang VI bis zum ersten Getriebegang I kann entsprechend dem sequentiellen Hochschalten unter Last sequentiell zurückgeschaltet werden.

Vom zweiten Getriebegang II kann unter Last durch eine Überschneidungssteuerung der ersten Lastschaltkupplung K1 zur zweiten Lastschaltkupplung K2 in den vierten Getriebegang IV in der Zahnradebene ZIV geschaltet werden und entsprechend kann vom vierten Getriebegang IV in den zweiten Getriebegang II unter Last zurückgeschaltet werden. Ferner sind Doppelhochschaltungen und Doppelrückschaltungen durch eine Überschneidungssteuerung der Lastschaltkupplungen K1, K2 zwischen dem dritten und dem fünften Getriebegang III-V und zwischen dem vierten Getriebegang IV in der Zahnradebene ZII/IV und dem sechsten Getriebegang VI unter Last möglich. Bei dem Zahnräderwechselgetriebe können sämtliche Getriebegänge I-VI unter Last durch eine Überschneidungssteuerung sequentiell geschaltet werden. Ferner können die wichtigsten Doppelhochschaltungen und Doppelrückschaltungen, die insbesondere vor und nach einem Überholvorgang benötigt werden, durch eine Überschneidungssteuerung der Lastschaltkupplungen K1, K2 unter Last durchgeführt werden.

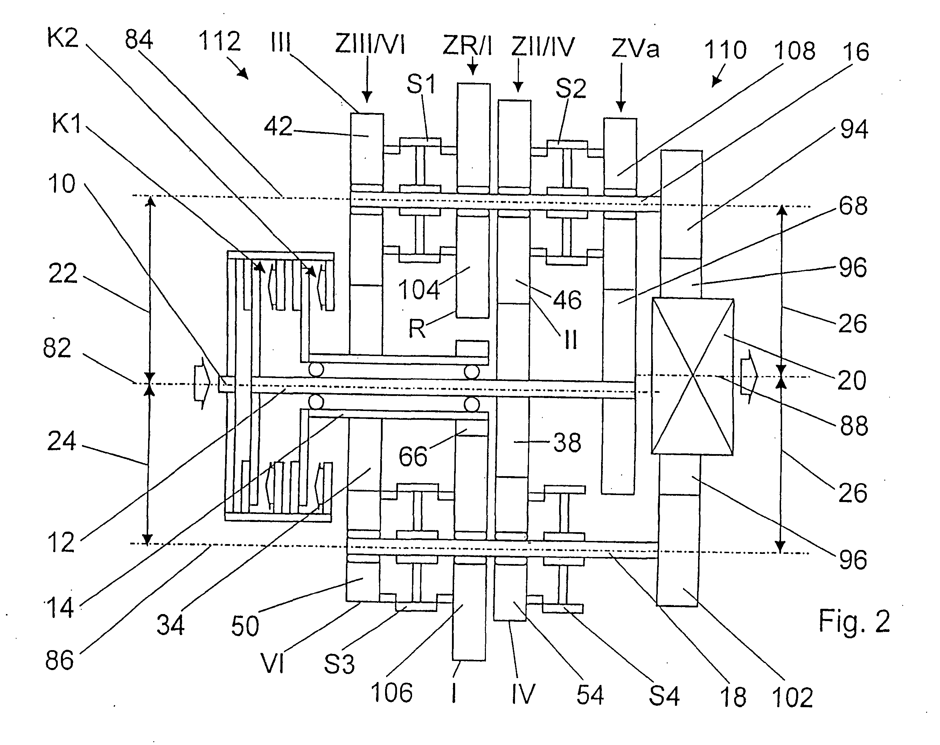

In Fig. 2 ist eine Variante nach Fig. 1 dargestellt, bei dem die Eingangswelle 10 mit dem Differentialgetriebe 20 durch ein erstes und ein zweites Teilgetriebe 110, 112 verbunden ist, die im Kraftfluß parallel zueinander angeordnet sind. Im wesentlichen gleichbleibende Bauteile sind grundsätzlich mit den gleichen Bezugszeichen beziffert. Nachfolgend werden die Besonderheiten des Ausführungsbeispiels in Fig. 2 im Vergleich zu dem Ausführungsbeispiel in Fig. 1 näher beschrieben. Bezüglich gleichbleibender Details und Funktionen kann auf die Beschreibung zum Ausführungsbeispiel in Fig. 1 verwiesen werden.

Das Zahnräderwechselgetriebe besitzt auf jeder Zwischenwelle 12, 14 jeweils nur zwei konzentrisch und drehfest gelagerte Festräder 34, 66, 38, 68. Anstatt den Zahnradebenen ZI, ZIV, ZR, ZV des Ausführungsbeispiels in Fig. 1 besitzt das Zahnräderwechselgetriebe in Fig. 2 neben den Zahnradebenen ZIII/VI und ZII/IV die Zahnradebene ZR/I und ZVa und damit zwei Zahnradebenen weniger als das Zahnräderwechselgetriebe in Fig. 1. Das Zahnräderwechselgetriebe in Fig. 2 kann dadurch besonders kurz, leicht und kostengünstig ausgeführt werden.

In der Zahnradebene ZR/I, die zwischen den Zahnradebenen ZIII/VI und ZII/IV angeordnet ist, kämmt das auf der Zwischenwelle 14 gelagerte Festrad 66 mit einem nicht näher dargestellten Zahnrad zur Drehsinnumkehr, das wiederum mit einem konzentrisch und drehbar auf der Abtriebswelle 16 gelagerten Losrad 104 kämmt. Das Losrad 104 ist dem Rückwärtsgetriebegang R zugeordnet und ist mit der Abtriebswelle 16 durch die Zahnradkupplung S1 kuppelbar. Ferner kämmt das Festrad 66 in der Zahnradebene ZR/I mit einem auf der Abtriebswelle 18 konzentrisch und drehbar gelagerten Losrad 106. Das dem ersten Getriebegang I zugeordnete Losrad 106 ist durch die Zahnradkupplung S3 mit der Abtriebswelle 18 kuppelbar.

In der Zahnradebene ZVa, die zwischen der Zahnradebene ZII/IV und den Festrädern 94, 102 angeordneten ist, kämmt das auf der Zwischenwelle 12 gelagerte Festrad 68 mit einem auf der Abtriebswelle 16 konzentrisch und drehbar gelagerten Losrad 108. Das dem fünften Getriebegang V zugeordnete Losrad 108 ist durch die Zahnradkupplung S2 mit der Abtriebswelle 16 kuppelbar.

Vom ersten bis zum vierten Getriebegang I-IV kann ohne weiteres ersichtlich sequentiell mittels einer Überschneidungssteuerung der beiden Lastschaltkupplungen K1, K2 unter Last hochgeschaltet werden. Vom vierten in den fünften Getriebegang IV-V kann entweder mit Lastunterbrechung oder vorteilhaft durch Zwischenschaltung des sechsten Getriebegangs VI über die Lastschaltkupplung K2 zur Erzeugung eines Füllmoments ebenfalls unter Last geschaltet werden. Der Gangwechsel vom fünften Getriebegang V in den sechsten Getriebegang VI ist wiederum durch eine Überschneidungssteuerung der Lastschaltkupplungen K1, K2 durchführbar. Entsprechend dem sequentiellen Hochschalten vom ersten in den sechsten Getriebegang I-VI kann sequentiell unter Last vom sechsten in den ersten Getriebegang VI-I zurückgeschaltet werden.

Besonders vorteilhaft können bei dem Zahnräderwechselgetriebe mit nur vier Zahnradebenen ZIII/VI, ZR/I, ZII/IV, ZVa die Doppelhochschaltungen und Doppelrückschaltungen zwischen dem dritten und dem fünften Getriebegang III-V und zwischen dem vierten und dem sechsten Getriebegang IV-VI unter Last durch eine Überschneidungssteuerung der Lastschaltkupplungen K1, K2 durchgeführt werden. Insbesondere vor einem Überholvorgang kann besonders schnell, unter Last, ohne Zwischenschaltung eines Getriebegangs und/oder eines Füllmoments vom fünften in den dritten Getriebegang V-III oder vom sechsten in den vierten Getriebegang VI-IV zurückgeschaltet werden.

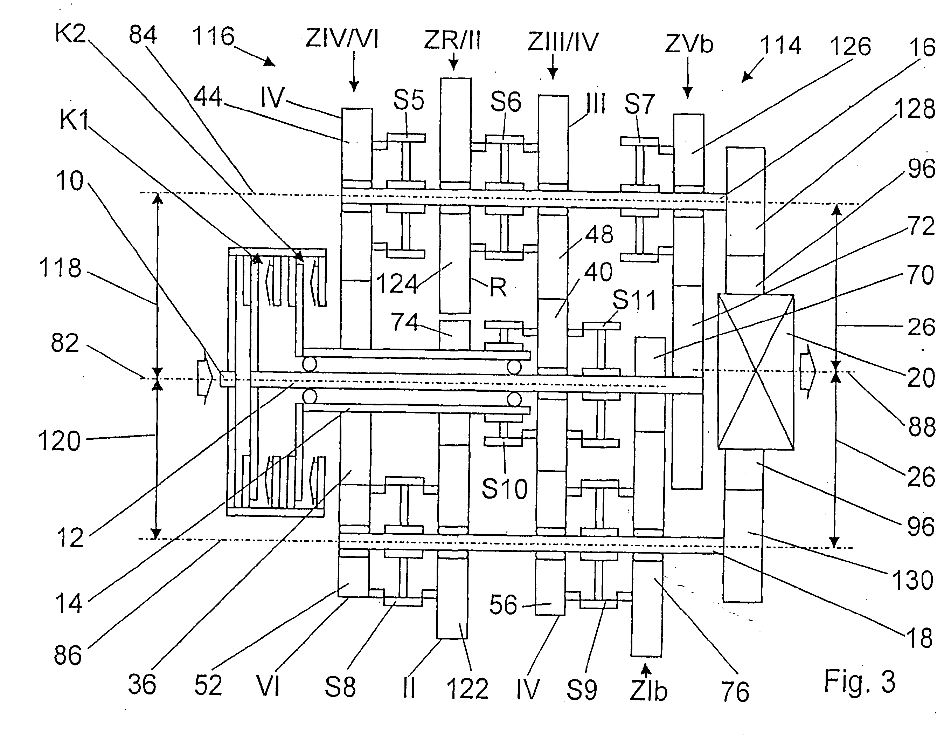

Fig. 3 zeigt eine Variante nach Fig. 1, bei der die Eingangswelle 10 durch ein erstes und ein zweites Teilgetriebe 114, 116 mit dem Differentialgetriebe 20 verbunden ist, die im Kraftfluß parallel zueinander angeordnet sind. Im wesentlichen gleichbleibende Bauteile sind wiederum mit den gleichen Bezugszeichen beziffert. Nachfolgend werden die Besonderheiten des Ausführungsbeispiels in Fig. 3 im Vergleich zu dem Ausführungsbeispiel in Fig. 1 näher beschrieben. Bezüglich gleichbleibender Details und Funktionen kann auf die Beschreibung zum Ausführungsbeispiel in Fig. 1 verwiesen werden.

Auf der Zwischenwelle 14 sind zwei Festräder 36, 74 konzentrisch und drehfest und auf der Zwischenwelle 12 sind ein Losrad 40 konzentrisch und drehbar und zwei Festräder 70, 72 konzentrisch und drehfest gelagert.

Die zweite Abtriebswelle 18 besitzt ausgehend von ihrer Mittelachse 86 einen Achsenabstand 120 zur Mittelachse 82 der Eingangswelle 10 und der Zwischenwellen 12, 14, der kleiner ist als ein Achsenabstand 118 ausgehend von der Mittelachse 84 der ersten Abtriebswelle 16 zur Mittelachse 82.
Das Festrad 36 auf der Zwischenwelle 14 kämmt sowohl mit einem auf der ersten Abtriebswelle 16 konzentrisch und drehbar gelagerten Losrad 44 als auch mit einem auf der zweiten Abtriebswelle 18 konzentrisch und drehbar gelagerten Losrad 52. Das Losrad 74 kämmt mit einem auf der Abtriebswelle 18 konzentrisch und drehbar gelagerten Losrad 122 und mit einem nicht näher dargestellten Zahnrad zur Drehsinnumkehr, das wiederum mit einem auf der Abtriebswelle 16 konzentrisch und drehbar gelagerten Losrad 124 kämmt. Ferner kämmt das Losrad 40 auf der Zwischenwelle 12 sowohl mit einem auf der ersten Abtriebswelle 16 konzentrisch und drehbar gelagerten Losrad 48 als auch mit einem auf der zweiten Abtriebswelle 18 konzentrisch und drehbar gelagerten Losrad 56. Durch die unterschiedlichen Achsenabstände 118, 120 kann eine Zahnradebene ZIV/VI mit dem Festrad 36 und den Losrädern 44, 52, eine Zahnradebene ZR/II mit dem Festrad 74 und den Losrädern 122, 124 und eine Zahnradebene ZIII/IV mit den Losrädern 40, 48, 56 jeweils zwei Getriebegängen IV, VI, R, II, III, IV zugeordnet werden.

Die Achsenabstände 118, 120 sind so gewählt, daß sich in der Zahnradebene ZIII/IV ein Stufensprung vom dritten in den vierten Getriebegang III-IV ergibt, der einem Stufensprung vom vierten in den sechsten Getriebegang IV-VI entspricht, dem die Zahnradebene ZIV/VI zugeordnet ist.

Auf der Abtriebswelle 16 sind neben dem Losrad 44 weitere drei konzentrisch und drehbar gelagerte Losräder 124, 48, 126 und ein konzentrisch und drehfest gelagertes Festrad 128 angeordnet. Das in der Zahnradebene ZIV/VI angeordnete Losrad 44 ist dem vierten Getriebegang IV zugeordnet und ist mit einer Zahnradkupplung S5 mit der Abtriebswelle 16 kuppelbar.

Das in der Zahnradebene ZR/II angeordnete Losrad 124 ist dem Rückwärtsgetriebegang R zugeordnet und das in der Zahnradebene ZIII/IV angeordnete Losrad 48 ist dem dritten Getriebegang III zugeordnet. Zwischen den Losrädern 124 und 48 ist eine Zahnradkupplung S6 angeordnet, die im Rückwärtsgetriebegang R das Losrad 124 und im dritten Getriebegang III das Losrad 48 mit der Abtriebswelle 16 kuppelt.

Das Losrad 126 kämmt in einer Zahnradebene ZVb mit dem Festrad 72 auf der Zwischenwelle 12, ist dem fünften Getriebegang V zugeordnet und ist mit einer Zahnradkupplung S7 mit der Abtriebswelle 16 kuppelbar. Das Festrad 128 treibt direkt mit einer festen Übersetzung auf das Zahnrad 96 des Differentialgetriebes 20 ab.

Neben dem Losrad 52 sind auf der Abtriebswelle 18 drei weitere konzentrisch und drehbar gelagerte Losräder 122, 56, 76 und ein konzentrisch und drehfest gelagertes Festrad 130 angeordnet. Das in der Zahnradebene ZIV/VI angeordnete Losrad 52 ist dem sechsten Getriebegang VI zugeordnet. Das in der Zahnradebene ZR/II angeordnete Losrad 122 ist dem zweiten Getriebegang II zugeordnet. Zwischen den Losrädern 52, 122 ist eine Zahnradkupplung S8 angeordnet, die im sechsten Getriebegang VI das Losrad 52 und im zweiten Getriebegang II das Losrad 122 mit der Abtriebswelle 18 kuppelt.

Das in der Zahnradebene ZIII/IV angeordnete Losrad 56 ist dem vierten Getriebegang IV zugeordnet. Das Losrad 76 kämmt in einer Zahnradebene ZIb mit dem auf der Zwischenwelle 12 gelagerten Festrad 70 und ist dem ersten Getriebegang I zugeordnet. Zwischen den Losrädern 56, 76 ist eine Zahnradkupplung S9 angeordnet, die im vierten Getriebegang IV das Losrad 56 und im ersten Getriebegang I das Losrad 76 mit der Abtriebswelle 18 kuppelt. Das Festrad 130 treibt direkt mit einer festen Übersetzung auf das Zahnrad 96 des Differentialgetriebes 20 ab.

Der erste und der zweite Getriebegang I, II sind auf der Abtriebswelle 18 angeordnet. Beim Gangwechsel vom ersten in den zweiten Getriebegang I-II wird stets über die Abtriebswelle 18 abgetrieben. Ein Wechsel der Abtriebswellen 16, 18 wird vermieden und es kann ein hoher Schaltkomfort erreicht werden.

Erfindungsgemäß können im Ausführungsbeispiel in Fig. 3 zusätzlich zu den Ausführungsbeispielen in den Fig. 1 und 2 die Zahnräder 36, 74, 40, 70, 72 auf den Zwischenwellen 12, 14 mit der ersten und der zweiten Lastschaltkupplung K1, K2 in Wirkverbindung gebracht werden.

Das in der Zahnradebene ZIII/IV auf der Zwischenwelle 12 gelagerte Losrad 40 kann mit einer Zahnradkupplung S10 mit der Zwischenwelle 14 gekuppelt und mit der Lastschaltkupplung K2 in Wirkverbindung gebracht werden. Ferner kann das Losrad 40 mit einer Zahnradkupplung S11 mit der Zwischenwelle 12 gekuppelt und mit der Lastschaltkupplung K1 in Wirkverbindung gebracht werden. Über das dem dritten Getriebegang III zugeordnete Losrad 48 und über das dem vierten Getriebegang IV zugeordnete Losrad 56 kann jeweils sowohl mit geschlossener Lastschaltkupplung K1 als auch mit geschlossener Lastschaltkupplung K2 abgetrieben werden. Es kann sequentiell vom ersten zum sechsten Getriebegang I-VI durch eine Überschneidungssteuerung der Lastschaltkupplungen K1, K2 unter Last hochgeschaltet und sequentiell durch eine Überschneidungssteuerung der Lastschaltkupplungen K1, K2 unter Last zurückgeschaltet werden.

Bei einem Schaltvorgang auf oder aus einem dritten oder vierten Getriebegang III, IV wird stets der dritte bzw. vierte Getriebegang gewählt auf den bzw. aus dem durch eine Überschneidungssteuerung der Lastschaltkupplungen K1, K2 unter Last geschaltet werden kann. Es können sämtliche Doppelhoch- und Doppelrückschaltungen I-III, II-IV, III-V, IV-VI durch eine Überschneidungssteuerung der Lastschaltkupplungen K1, K2 unter Last durchgeführt werden.

Über die Zahnradkupplungen S10, S11 können die Zwischenwellen 12, 14 miteinander in Wirkverbindung gebracht werden, und zwar indem die Zahnradkupplung S10 das Losrad 40 mit der Zwischenwelle 14 und die Zahnradkupplung S11 das Losrad 40 mit der Zwischenwelle 12 kuppelt. Es kann über die erste Lastschaltkupplung K1, die Zwischenwelle 12, die Zahnradkupplung S11, das Losrad 40, die Zahnradkupplung S10 auf die Zwischenwelle 14 und über die Festräder 74 und 36 abgetrieben werden. Ferner kann über die zweite Lastschaltkupplung K2, über die Zwischenwelle 14, die Zahnradkupplung S10, das Losrad 40, die Zahnradkupplung S11 auf die Zwischenwelle 12 und über die Festräder 70, 72 abgetrieben werden. Insbesondere kann dadurch mit der ersten Lastschaltkupplung K1, mit der zweiten Lastschaltkupplung K2 oder mit beiden Lastschaltkupplungen K1, K2 gemeinsam aus dem ersten Getriebegang I und auch aus dem zweiten Getriebegang II angefahren werden. Anstatt mit zwei Zahnradkupplungen S10, S11 können die Zwischenwellen 12, 14 auch grundsätzlich mit einem Schaltelement miteinander in Wirkverbindung gebracht werden.

Beim Anfahren aus dem ersten Getriebegang I mit beiden Lastschaltkupplungen K1, K2 sind beide Lastschaltkupplungen K1, K2 geschlossen. Die Zahnradkupplung S10 kuppelt das Losrad 40 mit der Zwischenwelle 14 und die Zahnradkupplung S11 kuppelt das Losrad 40 mit der Zwischenwelle 12. Ferner kuppelt die Zahnradkupplung S9 das Losrad 76 mit der Abtriebswelle 18. Der Kraftfluß verläuft von der Eingangswelle 10 über die erste Lastschaltkupplung K1, die Zwischenwelle 12, das Festrad 70, das Losrad 76, die Zahnradkupplung S9, die Abtriebswelle 18 und über das Festrad 130 zum Differentialgetriebe 20 und von der Eingangswelle 10 über die zweite Lastschaltkupplung K2, die Zwischenwelle 14, die Zahnradkupplung S10, das Losrad 40, die Zahnradkupplung S11, die Zwischenwelle 12, das Festrad 70, das Losrad 76, die Zahnradkupplung S9, die Abtriebswelle 18 und über das Festrad 130 zum Differentialgetriebe 20. Sinkt die Differenzdrehzahl in den Lastschaltkupplungen K1, K2 auf Null, wird die Lastschaltkupplung K2 geöffnet.

Wird allein mit der zweiten Lastschaltkupplung K2 aus dem ersten Getriebegang I angefahren, kann durch Übergabe an die Lastschaltkupplung K1 ohne Zugkraftunterbrechung oder direkt mit Zugkraftunterbrechung in den zweiten Getriebegang II geschaltet werden. In entsprechender Weise kann aus dem zweiten Getriebegang II angefahren werden.

Bei einer Ausgestaltung ist vorteilhaft eine Abtriebswelle dem vierten, dem fünften und dem sechsten Getriebegang und eine Abtriebswelle dem ersten, dem zweiten und dem dritten Getriebegang sowie dem Rückwärtsgetriebegang zugeordnet, wobei die Zahnradebene für den dritten und sechsten Getriebegang, eine Zahnradebene für den ersten Getriebegang und eine Zahnradebene für den vierten Getriebegang jeweils ein Zahnrad auf der einen Zwischenwelle und die Zahnradebene für den zweiten und vierten Getriebegang, eine Zahnradebene für den fünften Getriebegang und eine Zahnradebene für den Rückwärtsgetriebegang jeweils ein Zahnrad auf der anderen Zwischenwelle aufweisen.

Um weiteren axialen Bauraum einzusparen, wird vorgeschlagen, auf jeder Zwischenwelle höchstens zwei Zahnräder anzuordnen. Vorteilhaft ist dabei eine Abtriebswelle dem zweiten, dem dritten, dem fünften Getriebegang und dem Rückwärtsgetriebegang und eine Abtriebswelle dem ersten, dem vierten und dem sechsten Getriebegang zugeordnet, wobei die Zahnradebene für den dritten und sechsten Getriebegang und eine Zahnradebene für den Rückwärtsgetriebegang und den ersten Getriebegang jeweils ein Zahnrad auf der einen Zwischenwelle und die Zahnradebene für den zweiten und vierten Getriebegang und eine Zahnradebene für den fünften Getriebegang jeweils ein Zahnrad auf der anderen Zwischenwelle aufweisen.

In einer vorteilhaften Ausgestaltung für einen breiten Anwendungsbereich ist eine Zahnradebene dem dritten und vierten Getriebegang zugeordnet und ein auf der Zwischenwelle gelagertes Zahnrad der Zahnradebene ist mit der ersten und der zweiten Lastschaltkupplung in Wirkverbindung bringbar. Bei der Ausgestaltung ist vorteilhaft eine Abtriebswelle dem ersten, dem zweiten, dem vierten und dem sechsten Getriebegang und die andere Abtriebswelle dem dritten, dem vierten und dem fünften Getriebegang sowie dem Rückwärtsgetriebegang zugeordnet, wobei eine Zahnradebene für den vierten und sechsten Getriebegang und eine Zahnradebene für den Rückwärtsgetriebegang und den zweiten Getriebegang jeweils ein Zahnrad auf der einen Zwischenwelle und eine Zahnradebene für den dritten und vierten Getriebegang, eine Zahnradebene für den ersten Getriebegang und eine Zahnradebene für den fünften Getriebegang jeweils ein Zahnrad auf der anderen Zwischenwelle aufweisen.

## Patentansprüche

1. Zahnräderwechselgetriebe, bei dem eine Eingangswelle (10) mit einem Differentialgetriebe (20) durch ein erstes und ein zweites Teilgetriebe (78, 80) verbunden ist, die im Kraftfluß parallel zueinander angeordnet sind und je eine reibschlüssige Lastschaltkupplung (K1, K2) und je eine Zwischenwelle (12, 14) aufweisen, die zueinander konzentrisch und koaxial zur Eingangswelle (10) angeordnet sind, wobei jeweils die Zwischenwelle (12, 14) über die Lastschaltkupplung (K1, K2) mit der Eingangswelle (10) wirkungsmäßig verbindbar ist, und mit zumindest einem Zahnrad (36, 74, 40, 70, 72) je Zwischenwelle (12, 14), von denen zumindest eine mit einer parallel zu den Zwischenwellen (12, 14) angeordneten ersten Abtriebswelle (16) wirkungsmäßig verbindbar ist, die direkt oder indirekt auf das Differentialgetriebe (20) abtreibt,
wobei parallel zur ersten Abtriebswelle (16) zumindest eine zweite Abtriebswelle (18) angeordnet ist, die zu den Zwischenwellen (12, 14) und/oder zu dem Differentialgetriebe (20) einen von der ersten Abtriebswelle (16) abweichenden Achsenabstand (118, 120) aufweist, und zumindest ein Zahnrad (36, 40) wenigstens einer Zwischenwelle (12, 14) sowohl mit einem Zahnrad (44, 48) auf der ersten Abtriebswelle (16) als auch mit einem Zahnrad (52, 56) auf der zweiten Abtriebswelle (18) kämmt,
wobei zumindest ein Zahnrad (40 bzw. 36) auf einer Zwischenwelle (12 bzw. 14) zwei Getriebegängen zugeordnet ist,
**dadurch gekennzeichnet,**
**dass** der erste und der zweite Getriebegang (I, II) auf einer gemeinsamen Abtriebswelle (16, 18) angeordnet sind,
wobei einer Zahnradebene (ZVb) des fünften Getriebegangs unmittelbar benachbart eine Zahnradebene (ZIb) des ersten Getriebegangs folgt, welcher unmittelbar benachbart eine Zahnradebene (ZIII) des dritten Getriebegangs (III) folgt,
wobei diese drei Zahnradebenen in dem axial über die eine Zwischenwelle (14) hinausragende Bereich der zweiten Zwischenwelle (12) liegen und wobei im axialen Bereich der einen Zwischenwelle (14) der zweite und sechste Getriebegang (II, VI) liegen.

2. Zahnräderwechselgetriebe nach Patentanspruch 1,
**dadurch gekennzeichnet,**
**dass** der erste und der zweite Getriebegang (I, II) auf einer gemeinsamen Abtriebswelle (16 bzw. 18) angeordnet sind, so dass beim Gangwechsel vom ersten (I) in den zweiten Getriebegang (II) über die gleiche Abtriebswelle (16 bzw. 18) abgetrieben werden kann, wobei ein Wechsel der Abtriebswellen (16, 18) vermieden werden kann und **dadurch** der Komfort für den meist unter hoher Last stattfindenden Gangwechsel vom ersten (I) in den zweiten (II) Getriebegang gesteigert werden kann.

3. Zahnräderwechselgetriebe nach einem der vorhergehenden Patentansprüche,
**dadurch gekennzeichnet,**
**dass** innerhalb der einen Zwischenwelle (14) die axial über diese hinausragende zweite Zwischenwelle (12) angeordnet ist, wobei der axial über die eine Zwischenwelle (14) hinausragende Bereich der zweiten Zwischenwelle (12)
- mehrere axial benachbarte Zahnräder (40, 70, 72) und
- an dessen axialem Ende das Festrad eines fünften Getriebegangs (V)
trägt.

4. Zahnräderwechselgetriebe nach einem der vorhergehenden Patentansprüche,
**dadurch gekennzeichnet,**
**dass** innerhalb der einen Zwischenwelle (14) die axial über diese hinausragende zweite Zwischenwelle (12) gelagert ist.

5. Zahnräderwechselgetriebe nach einem der vorhergehenden Patentansprüche,
**dadurch gekennzeichnet,**
**dass** ein Losrad (126) in einer Zahnradebene (ZV) mit dem auf der Zwischenwelle (12) gelagerten Festrad (72) kämmt und dem fünften Getriebegang (V) zugeordnet ist.

6. Zahnräderwechselgetriebe nach einem der vorhergehenden Patentansprüche,
**dadurch gekennzeichnet,**
**dass** ein Losrad (126) des fünften Getriebeganges auf der ersten Abtriebswelle (16 bzw. 18) gelagert ist, wohingegen das Losrad (76) des ersten Getriebeganges auf der zweiten Abtriebswelle (18 bzw. 16) gelagert ist.

7. Zahnräderwechselgetriebe nach Patentanspruch 6,
**dadurch gekennzeichnet,**
**dass** auf der den Lastschaltkupplungen (K1, K2) zugewandten Seite
- des Losrades des fünften Getriebeganges (V) und
- des Losrades des ersten Getriebeganges (I) jeweils eine Zahnradkupplung (S7, S9) zur Kopplung dieses Losrades mit dessen Abtriebswelle (16 bzw. 18) angeordnet ist.

8. Zahnräderwechselgetriebe nach einem der vorhergehenden Ansprüche,
**dadurch gekennzeichnet,**
**dass** die zweite Zwischenwelle (12) innerhalb der ersten Zwischenwelle (14) mittels zwei axial benachbarten Lagern gelagert ist.

9. Zahnräderwechselgetriebe nach einem der vorhergehenden Patentansprüche,
**dadurch gekennzeichnet,**
**dass** die Lastschaltkupplungen (K1, K2) unterschiedlich für verschiedene Anfahrvorgänge ausgelegt sind und/oder einzeln zum Anfahren aus einem höheren Getriebegang genutzt werden.

## Claims

1. Gear change transmission, in which an input shaft (10) is connected with a differential gear (20) by first and second partial transmission groups (78, 80) arranged parallel to one another in the power transmission path and each having a change-under-load clutch (K1, K2) and an intermediate shaft (12, 14), the latter being arranged concentrically with one another and coaxially with the input shaft (10), such that each intermediate shaft (12, 14) can be operatively connected via its change-under-load clutch (K1, K2) to the input shaft (10), and with at least one gearwheel (36, 74, 40, 70, 72) for each intermediate shaft (12, 14), of which at least one can be brought into operative connection with a first drive output shaft (16) arranged parallel to the intermediate shafts (12, 14), which directly or indirectly drives the differential (20), and at least one second drive output shaft (18) arranged parallel to the first drive output shaft (16), whose axis is a distance (118, 120) away from the intermediate shafts (12, 14) and/or from the differential (20) different from the distance of the first drive output shaft (16), and at least one gearwheel (36, 40) of at least one intermediate shaft (12, 14) meshes both with a gearwheel (44, 48) on the first drive output shaft (16) and with a gearwheel (52, 56) on the second drive output shaft (18),
such that at least one gearwheel (40 or 36) on one intermediate shaft (12 or 14 respectively) is associated with two gears,
**characterised in that**
the first and second gears (I, II) are arranged on a common drive output shaft (16,18),), and a gearset level (ZVb) of the fifth gear is directly adjacent to a gearset level (ZIb) of the first gear, which is directly adjacent to a gearset level (ZIII) of the third gear (III), these three gearset levels being located in the area of the second intermediate shaft (12) that projects axially beyond the first intermediate shaft (14), and such that the second and sixth gears (II, VI) are located in the axial area of the first intermediate shaft (14).

2. Gear change transmission according to Claim 1,
**characterised in that**
the first and second gears (I, II) are arranged on a common drive output shaft (16 or 18), such that when shifting from first gear (I) to second gear (II) the drive power is derived from the same output shaft (16 or 18), so avoiding a change between the drive output shafts (16, 18) and thereby increasing comfort during a gearshift from first (I) to second gear (II), which usually takes place under high load.

3. Gear change transmission according to any of the preceding claims,
**characterised in that**
the second intermediate shaft (12) is arranged inside the first intermediate shaft (14) out of which it projects axially, and the part of the said second intermediate shaft (12) projecting out of the said first intermediate (14) shaft supports:
- several axially adjacent gearwheels (40, 70, 72), and
- at its axial end the fixed gearwheel of a fifth gear (V).

4. Gear change transmission according to any of the preceding claims,
**characterised in that**
the second intermediate shaft (12) is mounted inside the first intermediate shaft (14) and projects out of it.

5. Gear change transmission according to any of the preceding claims,
**characterised in that**
a free gearwheel (126) meshes in a gearset level (ZV) with the fixed gearwheel (72) mounted on the intermediate shaft (12) and is associated with the fifth gear (V).

6. Gear change transmission according to any of the preceding claims,
**characterised in that**
a free gearwheel (126) of the fifth gear is mounted on the first drive output shaft (16 or 18), and in contrast the free gearwheel (76) of the first gear is mounted on the second drive output shaft (18 or 16, respectively).

7. Gear change transmission according to Claim 6,
**characterised in that**
on the side of
- the free gearwheel of the fifth gear (V) and
- the free gearwheel of the first gear (I),
facing towards the change-under-load clutches (K1, K2), respective gear-type clutches (S7, S9) are arranged for coupling the said free gearwheels with their output shaft (16 or 18 respectively).

8. Gear change transmission according to any of the preceding claims,
**characterised in that** the second intermediate shaft (12) is mounted inside the first intermediate shaft (14) by means of two axially adjacent bearings.

9. Gear change transmission according to any of the preceding claims,
**characterised in that** the change-under-load clutches (K1, K2) are designed differently for different starting operations and/or are used individually for starting off from a higher gear.

## Revendications

1. Boîtes de vitesses à engrenages, dans laquelle un arbre d'entrée (10) est relié à un mécanisme différentiel (20) via un premier et un second mécanisme partiel (78, 80) qui sont agencés parallèlement l'un à l'autre dans le flux des forces et qui comprennent chacun un embrayage à commutation sous charge (K1, K2) à coopération de friction et un arbre intermédiaire (12, 14), lesquels sont agencés concentriquement l'un par rapport à l'autre et coaxiaux par rapport à l'arbre d'entrée (10), dans laquelle chaque arbre intermédiaire (12, 14) peut être relié en termes d'action à l'arbre d'entrée (10) via l'embrayage à commutation sous charge respectif (K1, K2), et comprenant au moins un engrenage (36, 74, 40, 70, 72) par arbre intermédiaire (12, 14), dont l'un au moins peut être relié en termes d'action à un premier arbre mené (16) agencé parallèlement aux arbres intermédiaires (12, 14), lequel est mené directement ou indirectement par le mécanisme différentiel (20), dans laquelle au moins un second arbre mené (18) est agencé parallèlement au premier arbre mené (16), second arbre mené qui présente par rapport aux arbres intermédiaires (12, 14) et/ou par rapport au mécanisme différentiel (20) un entraxe (118, 120) différent de celui du premier arbre mené (16), et au moins un engrenage (36, 40) d'au moins un arbre intermédiaire (12, 14) engrène à la fois avec un engrenage (44, 48) sur le premier arbre mené (16) et avec un engrenage (52, 56) sur le second arbre mené (18),
dans laquelle au moins un engrenage (40 ou 36) sur un arbre intermédiaire (12 ou 14) est associé à deux rapports de vitesses,
**caractérisée en ce que** le premier et le second rapport de vitesse (I, II) sont agencés sur un arbre mené commun (16, 18),
un plan d'engrenage (ZVb) du cinquième rapport de vitesse suit directement au voisinage d'un plan d'engrenage (ZIb) du premier rapport de vitesse, lequel suit directement au voisinage d'un plan d'engrenage (ZIII) du troisième rapport de vitesse (III), et dans laquelle lesdits trois plans d'engrenage sont situés dans la zone du second arbre intermédiaire (12) qui sort axialement au-delà du premier arbre intermédiaire (14), et le second et le sixième rapport de vitesse (II, VI) sont situés dans la zone axiale du premier arbre intermédiaire (14).

2. Boîtes de vitesses à engrenages selon la revendication 1, **caractérisée en ce que** le premier et le second rapport de vitesse (I, II) sont agencés sur un arbre mené commun (16 ou 18) de telle façon que lors du passage du premier (I) au second rapport de vitesse (II), ils peuvent être menés via le même arbre mené (16 ou 18), et l'on peut éviter un échange des arbres menés (16, 18), grâce à quoi le confort pour le passage du premier (I) au second rapport de vitesse (II), qui a lieu la plupart du temps sous charge élevée, peut être augmenté.

3. Boîtes de vitesses à engrenages selon l'une des revendications précédentes, **caractérisée en ce que**
le second arbre intermédiaire (12) est agencé à l'intérieur du premier arbre intermédiaire (14) et sortant en porte-à-faux hors de celui-ci,
et la zone du second arbre intermédiaire (12) qui sort en porte-à-faux hors du premier arbre intermédiaire (14)
- porte plusieurs engrenages axialement voisins (40, 70, 72), et
- porte à son extrémité axiale l'engrenage fixe d'un cinquième rapport de vitesse (V),

4. Boîtes de vitesses à engrenages selon l'une des revendications précédentes, **caractérisée en ce que** le second arbre intermédiaire (12) est agencé à l'intérieur du premier arbre intermédiaire (14) et sortant en porte-à-faux hors de celui-ci.

5. Boîtes de vitesses à engrenages selon l'une des revendications précédentes, **caractérisée en ce qu'**un engrenage fou (126) dans un plan d'engrenage (ZV) engrène avec l'engrenage fixe (72) monté sur l'arbre intermédiaire (12) et est associé au cinquième rapport de vitesse (V).

6. Boîtes de vitesses à engrenages selon l'une des revendications précédentes, **caractérisée en ce qu'**un engrenage fou (126) du cinquième rapport de vitesse est monté sur le premier arbre mené (16 ou 18), cependant que l'engrenage fou (76) du premier rapport de vitesse est monté sur le premier arbre mené (18 ou 16).

7. Boîtes de vitesses à engrenages selon la revendication 6, **caractérisée en ce qu'**un accouplement à engrenages respectif (S7, S9) est agencé, sur le côté tourné vers les embrayages à commutation sous charge (K1, K2),
-- de l'engrenage fou du cinquième rapport de vitesse (V), et
-- et de l'engrenage fou du premier rapport de vitesse (I),
pour l'accouplement de cet engrenage fou avec son arbre mené (16 ou 18).

8. Boîtes de vitesses à engrenages selon l'une des revendications précédentes, **caractérisée en ce que** le second arbre intermédiaire (12) est monté à l'intérieur du premier arbre intermédiaire (14) au moyen de deux paliers axialement voisins.

9. Boîtes de vitesses à engrenages selon l'une des revendications précédentes, **caractérisée en ce que** les embrayages à commutation sous charge (K1, K2) sont conçus de façon différente pour des processus de démarrage différents et/ou sont utilisés individuellement pour le démarrage à partir d'un rapport de vitesse plus élevé.
